# EUROPEAN PATENT SPECIFICATION

(11) **EP 3 146 839 B1**
(45) Date of publication and mention of the grant of the patent: **07.07.2021**
(21) Application number: 16382439.4
(22) Date of filing: 21.09.2016
(51) Int. Cl.: A01M 13/00, A01N 25/18, C06D 3/00

(54) **SMOKE GENERATOR CONTAINER FOR APPLYING PHYTOSANITARY PRODUCTS AND/OR FOOD ADDITIVES ON FRUITS AND VEGETABLES, INSTALLATION OF SMOKE GENERATOR CONTAINERS AND MANUFACTURING METHOD**
RAUCHERZEUGUNGSBEHÄLTER ZUR APPLIKATION VON PHYTOSANITÄREN PRODUKTEN UND/ODER LEBENSMITTELZUSÄTZEN AUF OBST UND GEMÜSE, ANLAGE FÜR RAUCHERZEUGUNGSBEHÄLTER UND HERSTELLUNGSVERFAHREN
CONTENANT DE GÉNÉRATEUR DE FUMÉE POUR APPLIQUER DES PRODUITS PHYTOSANITAIRES ET/OU DES ADDITIFS ALIMENTAIRES SUR DES FRUITS ET DES LÉGUMES, INSTALLATION DE CONTENANTS DE GÉNÉRATEUR DE FUMÉE ET PROCÉDÉ DE FABRICATION

(30) Priority: 21.09.2015 ES 201531347
(43) Date of publication of application: 29.03.2017
(73) Proprietor: Fomesa Fruitech, S.L., 46469 Beniparrell (ES)
(72) Inventor: Conesa Roca, Ernesto, 46469 Beniparrell (ES); García Breijo, Eduardo, 46469 Beniparrell (ES); Laguarda Miró, Nicolás, 46469 Beniparrell (ES)
(74) Representative: Elzaburu S.L.P.

(56) References cited:
- WO-A2-2013/169813
- DE-T2- 60 313 192
- ES-A1- 8 700 547
- ES-U- 255 910
- FR-A1- 2 202 646
- JP-A- 2011 193 874

## Description

Smoke generator for applying phytosanitary products and/or food additives on fruits and vegetables, installation of smoke generators and manufacturing method.

### Field of the Invention

The present invention refers to a smoke generator for applying phytosanitary products and food additives for fruit and vegetables, fungicidal products and others having different activity, especially for use to preserve fruits and vegetables after being harvested. The invention also refers to an installation comprising several smoke generators for applying phytosanitary products and/or food additives for fruits and vegetables, and a method for manufacturing said smoke generator.

### Prior State of the Art

There are fungicidal products and other types having diverse activity applicable in both the treatment of empty constructions used for storing and handling fruit and vegetables (cold rooms for preserving or degreening, warehouses, trucks, wagons, etc.), as well as in the direct treatment of the products themselves.

The application of said products is usually done with smoke generator containers that enable them to be dispersed as smoke and which are easy to use.

JP 2011 193874 A discloses a smoking device of direct heating, sufficiently volatilizing agents, suppressing temperature increase of the installation surface of a container and easy in handling. The smoking device comprises a container of a bottom having cylinder shape and filled with a smoking agent, a jet plate set at the opening of the container and equipped with smoking holes and an igniter igniting on the smoking agent, wherein the container comprises a substrate layer having an insulation property, and the inside surface corresponding to a smoking chamber partitioned with the container and the jet plate is covered with an infrared reflective material. The infrared reflective material is preferably aluminum.

ES 255910 U discloses an improved subliming device for fungicidal treatments of fruits or other agricultural products, characterized essentially by the fact of comprising a tank destined to contain fungicidal products of the type that by means of contribution of heat they undergo a change of their physical state whose result are gases with fungicidal properties; because the tank incorporates electrical resistances usable as means for the supply of the above heat; that the reservoir is fixed to a housing within which there is disposed a roller of blade driven by an electric motor; in that said housing has a suction port located on the side adjacent the tank, the mouth of which serves to enter the housing of the gases generated in the tank; in that said housing has a wide air projection port, through which the aspirated gases from the tank are expelled; and in that said casing is mounted in a rotating and rotating organization on a horizontal axis with its proper orientation in the optimum working position.

ES 8700547 A1 discloses a process for preparing a novel fumigating tablet consisting of a fungicide selected from at least one of imazalil, iprodione, dichloran and diclidine. It also describes a method for preventing the deterioration of vegetable products stored in enclosed areas by means of the use of said tablets.

Spanish patent ES 2135340 discloses a fungicidal product with a given composition for applying with a smoke generator, indicated for environmental disinfection of empty, closed areas or areas that contain stored fruits and vegetables, as well as the method for obtaining said fungicidal product.

Spanish patent ES 2142278, an addition to the main patent ES 2135340, specifically develops the subject matter of the latter and extends its purpose. It is not limited to the fungicidal character of the products, but rather it covers other phytosanitary applications of the products, such as preservatives (antioxidants), insecticides exclusively for agricultural use (post.- harvest) or antigermatives for applying to stored potatoes.

Publication WO2013/169813A2 also discloses a smoke generator with an electrical igniter.

These smoke generator containers that, among others, contain a combustible product, have a wick for igniting it. The fuel ignites after igniting the wick. The gaseous combustion products create pressure inside the container, from which they exit projected through an orifice in the center of the lid, dragging behind the active material that is dispersed in the smoke and expands with it, reaching all the corners of the premises.

Using wicks to ignite the containers may cause problems such as lack of combustion of the mixtures, or even flames, which in turn could result in high risks due to the flammability of the materials inside the construction where the product is applied. These risks constitute a very important obstacle to the sale of these mixtures, especially in European Union member states.

### Summary of the Invention

The subject matter of the present invention, therefore, is to provide a smoke generator for applying phytosanitary products and/or food additives on fruits and vegetables that solves the noted drawbacks of the prior art.

The invention provides a smoke generator for applying phytosanitary product and/or food additives in fruits and vegetables that comprises a smoke generator container and a product to be applied, the smoke generator container comprising a recipient, in the inside of which is the product to be applied and an ignition system of the container, wherein the product to be applied comprises the following components:
- an active ingredient, having a proportion by weight between 5% and 30%, which comprises one or various of these products: Imazalil, o-phenylphenol, thiophanate-methyl, thiabendazole, prochloraz, fosetyl-AI, chlorpropham, pyrethrins, pyrimethanil, fenhexamid, quaternary ammonium, biguanidine, sorbic acid, potassium sorbate, essential oils, ascorbic acid, citric acid and citrates;
- a phyllosilicate matrix having a proportion by weight between 25% and 80%, that comprises one or various of these products: antigorite, chrysotile, kaolinite, vermiculite, talc, pyrophyllite, biotite, muscovite, lepidolite, daisy, glauconite and chlorite;
- a polysaccharide, having a proportion by weight between 5% and 25%; and
- potassium chlorate, having a proportion by weight between 5% and 20%;
and wherein the ignition system of the container comprises an electrical resistor from which exit fireproof cables, susceptible for connecting to a power source.

The invention further provides an installation of smoke generators for applying phytosanitary products and or food additives on fruits and vegetables according to claim 7, that comprises various smoke generators for applying phytosanitary products and/or food additives on fruits and vegetables.

The invention further provides a method for manufacturing a smoke generator for applying phytosanitary products and/or food additives on fruits and vegetables, according to claim 8.

The ignition system provides a way to safely apply the mixture, thereby avoiding the possibility of the mixture failing to ignite due to faults that occur when ignition is produced by the wick, besides preventing flames from appearing, as they could provoke an incident by contacting flammable materials that are usually inside the constructions where the disinfection of the fruits and vegetables is done.

The installation of smoke generators of the invention also enables a slow ignition and at a distance of more than one smoke generator, so as to avoid the operators coming into contact with the product, thereby eliminating a risk factor during the application.

The inclusion of polysaccharide as flammable material makes it possible, once the oxidizing has started by heat, for the heat to be uniformly transmitted to the whole mixture. Furthermore, the potassium chlorate acts as an oxidizing agent that supplies oxygen for the start, and the subsequent continuity of the ignition.

Other advantageous embodiments of the invention are disclosed in the dependent claims.

### Brief Description of the Drawings

The following gives non-limiting descriptions of example embodiments of the subject matter of the present invention, making reference to the accompanying drawings:
Figure 1 displays a representation of a smoke generator of the invention for applying phytosanitary products and/or food additives on fruits and vegetables.
Figure 2 displays a representation of an installation of smoke generators of the invention for applying phytosanitary products and/or food additives on fruits and vegetables.

### Detailed Description of the Invention

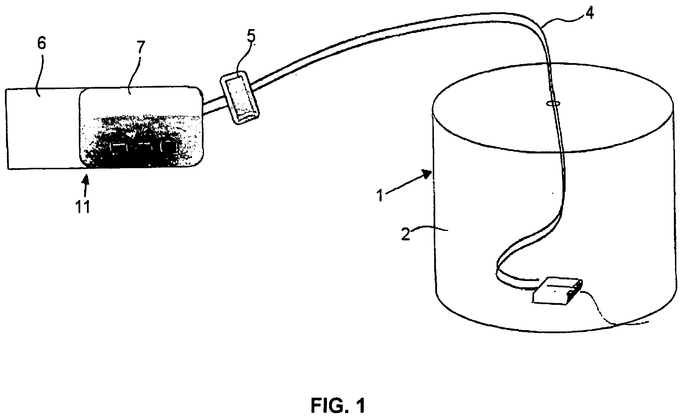

Figure 1 displays a smoke generator container 1 of the invention for applying phytosanitary products and/or food additives on fruits and vegetables.

The smoke generator container consists in a recipient 2 with a phytosanitary product and food additives in the interior of which an electrical resistor 3 is placed, from which one of the fireproof cables 4 exits toward the exterior. Said fireproof cables 4 may be connected directly or indirectly to a power source 6. The end of the fireproof cables 4 can have a connection.

The product to be applied is comprised of the following components:
- an active ingredient, having a proportion by weight between 5% and 30%, which comprises one or various of these products: Imazalil, o-phenylphenol, thiophanate-methyl, thiabendazole, prochloraz, fosetyl-AI, chlorpropham, pyrethrins, pyrimethanil, fenhexamid, quaternary ammonium, biguanidine, sorbic acid, potassium sorbate, essential oils, ascorbic acid, citric acid and citrates;
- a phyllosilicate matrix having a proportion by weight between 25% and 80%, that comprises one or various of these products: antigorite, chrysotile, kaolinite, vermiculite, talc, pyrophyllite, biotite, muscovite, lepidolite, daisy, glauconite and chlorite;
- a polysaccharide, having a proportion by weight between 5% and 25%; and
- potassium chlorate, having a proportion by weight between 5% and 20%.

As indicated, the active ingredient may contain phytosanitary products (Imazalil, o-phenylphenol, thiophanate-methyl, thiabendazole, prochloraz, fosetyl-AI, chlorpropham, pyrethrins, pyrimethanil, fenhexamid, quaternary ammonium, biguanidine, sorbic acid, potassium sorbate, essential oils, ascorbic acid, citric acid and citrates)

In a preferred embodiment, the product comprises the following components:
- an active ingredient, having a proportion by weight of 25%.
- a phyllosilicate matrix having a proportion by weight of 50%
- a polysaccharide, having a proportion by weight of 15%, and
- potassium chlorate, having a proportion by weight of 10%.

The electrical resistor 3 can be placed on the lower portion of the recipient and, more specifically, at the bottom of the recipient 2.

The ignition system is based on provoking a heating at the bottom portion of the recipient 2 using a resistor 3 and a power source 6, such as a battery (12V, for example). Due to the joule effect, the resistor 3 can cause a temperature increase in the lower portion of the recipient 2, until reaching the critical temperature for starting combustion. The system enables reaching temperatures greater than 200ºC and igniting the containers 1 in about 5 minutes.

Including polysaccharide as the flammable material makes it possible that once combustion has started with the heat provided by the resistor 3, it is uniformly transmitted throughout the mixture. On the other hand, the potassium chlorate actuates as an oxidizer product that supplies oxygen for start up and subsequent ignition continuity. Therefore, there is no need to have an upper air chamber, as there are in other smoke generator containers of the prior art.

A control system 7 can be placed between the power source 6 and the electric resistor 3. For example, a switch can be placed that activates the ignition of the container 1.

Preferably the power source 6 and the control system 7 are located inside the same integrated module 11.

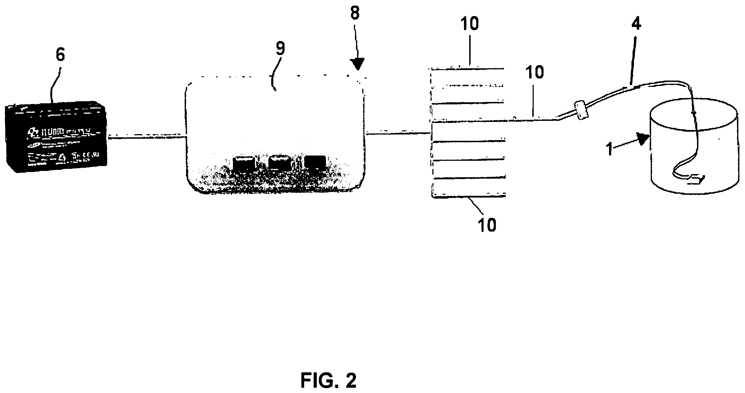

Figure 2 depicts a representation of an installation 8 of smoke generators of the invention for applying phytosanitary products and/or food additives on fruits and vegetables. It is possible to make an electric connection network with several smoke generator containers 1, that enable simultaneous ignition through a single power source 6. In this case the ignition system of the containers 1 comprise a centralized control system 9 with several connections located following the power source 6, so that a fireproof cable 4 exits each connection 10 headed towards each smoke generator container 1.

It is possible to include a programmable automation device like control system 9 that enables igniting diverse smoke generator containers 1 in a determined order. Furthermore, a long distance ignition system would also be possible with a bluetooth type radiofrequency, infrared or mobile phone by using an app.

The manufacturing method of a smoke generator for applying phytosanitary products and/or food additives on fruits and vegetables of the invention comprises the following steps:
- place an electrical resistor 3 in inside the recipient 2
- connect resistor 3 to fireproof cables 4 that, starting from the electrical resistor 3, extend towards the exterior of the recipient 2
- manufacture the product to be applied, which comprises the following steps:
   - add the components in the following order: the phyllosilicate matrix, polysaccharide, and the active substance,
   - mix, homogenize and mill said mixture,
   - add potassium chlorate, and
   - mix and homogenize; and
- pack the product inside the recipient 2

Although a few embodiments of the invention have been described and depicted, it is clear that other modifications comprised within the scope thereof can be introduced, and the invention should not be considered limited to said embodiments, but rather only to the content of the following claims.

## Claims

1. Smoke generator for applying phytosanitary product and/or food additives in fruits and vegetables that comprises a smoke generator container (1) and a product to be applied, the smoke generator container (1) comprising a recipient (2), in the inside of which is the product to be applied and an ignition system of the container (1), **characterized in that** the product to be applied comprises the following components:
- an active ingredient, having a proportion by weight between 5% and 30%, which comprises one or various of these products: Imazalil, o-phenylphenol, thiophanate-methyl, thiabendazole, prochloraz, fosetyl-AI, chlorpropham, pyrethrins, pyrimethanil, fenhexamid, quaternary ammonium, biguanidine, sorbic acid, potassium sorbate, essential oils, ascorbic acid, citric acid and citrates;
- a phyllosilicate matrix having a proportion by weight between 25% and 80%, that comprises one or various of these products: antigorite, chrysotile, kaolinite, vermiculite, talc, pyrophyllite, biotite, muscovite, lepidolite, daisy, glauconite and chlorite;
- a polysaccharide, having a proportion by weight between 5% and 25%; and
- potassium chlorate, having a proportion by weight between 5% and 20%;
and **in that** the ignition system of the container (1) comprises an electrical resistor (3) from which exit fireproof cables (4), susceptible for connecting to a power source (6).

2. Smoke generator for applying phytosanitary products and/or food additives on fruits and vegetables, according to claim 1, **characterized in that** the product is comprised of the following components:
- an active ingredient, having a proportion by weight of 25%.
- a phyllosilicate matrix having a proportion by weight of 50%
- a polysaccharide, having a proportion by weight of 15%, and
- potassium chlorate, having a proportion by weight of 10%.

3. Smoke generator for applying phytosanitary products and/or food additives on fruits and vegetables, according to any of the previous claims, **characterized in that** the electrical resistor (3) is located at the bottom portion of the recipient (2).

4. Smoke generator for applying phytosanitary products and/or food additives on fruits and vegetables, according to any of the previous claims, **characterized in that** it additionally comprises a 12 V battery as the power source (6) connected to the electrical resistor (3).

5. Smoke generator for applying phytosanitary products and/or food additives on fruits and vegetables, according to claim 4, **characterized in that** the ignition system of the container additionally comprises a control system (7) between the energy source (6) and the electrical resistor (3).

6. Smoke generator for applying phytosanitary products and/or food additives on fruits and vegetables, according to claim 5, **characterized in that** the power source (6) and the control system (7) are located in an integrated module (11).

7. Installation (8) of smoke generators for applying phytosanitary products and/or food additives on fruits and vegetables, that comprises several smoke generators for applying phytosanitary products and/or food additives on fruits and vegetables according to claims 1 to 4, **characterized in that** the ignition system of the containers comprises a centralized control system (9) having various connections (10) located following a power source (6), so that a fireproof cable (4) exits each connection (10) towards each smoke generator container (1).

8. Manufacturing method of a smoke generator for applying phytosanitary products and/or food additives in fruits and vegetables, according to any of claims 1 to 4, **characterized in that** it comprises the following steps:
- place an electrical resistor (3) inside the recipient (2);
- connect the resistor (3) to the fireproof cables (4) that, starting from the electrical resistor (3), extend towards the exterior of the recipient (2);
- manufacture the product to be applied, which comprises the following steps:
- add the components in the following order: the phyllosilicate matrix, polysaccharide, and the active substance,
- mix, homogenize and mill said mixture,
- add the potassium chlorate, and
- mix and homogenize; and
- pack the product inside the recipient (2).

## Patentansprüche

1. Raucherzeuger zur Applikation von phytosanitären Produkten und/oder Lebensmittelzusätzen auf Obst und Gemüse, der einen Raucherzeugungsbehälter (1) und ein zu applizierendes Produkt umfasst, wobei der Raucherzeugungsbehälter (1) einen Rezipienten (2), in dessen Inneren sich das zu applizierende Produkt befindet, und ein Zündsystem des Behälters (1) umfasst, **dadurch gekennzeichnet, dass** das zu applizierende Produkt die folgenden Komponenten umfasst:
- einen Wirkstoff mit einem Gewichtsanteil zwischen 5 % und 30 %, der eines oder mehrere dieser Produkte umfasst: Imazalil, o-Phenylphenol, Thiophanatmethyl, Thiabendazol, Prochloraz, Fosetyl-Al, Chlorpropham, Pyrethrine, Pyrimethanil, Fenhexamid, quaternäres Ammonium, Biguanidin, Sorbinsäure, Kaliumsorbat, ätherische Öle, Ascorbinsäure, Zitronensäure und Citrate;
- eine Phyllosilikatmatrix mit einem Gewichtsanteil zwischen 25 % und 80 %, die eines oder mehrere dieser Produkte umfasst: Antigorit, Chrysotil, Kaolinit, Vermiculit, Talk, Pyrophyllit, Biotit, Muskovit, Lepidolith, Gänseblümchen, Glaukonit und Chlorit;
- ein Polysaccharid mit einem Gewichtsanteil zwischen 5 % und 25 %; und
- Kaliumchlorat, mit einem Gewichtsanteil zwischen 5 % und 20 %;
und dass das Zündsystem des Behälters (1) einen elektrischen Widerstand (3) umfasst, von dem feuerfesten Kabel (4) ausgehen, die zum Anschluss an eine Stromquelle (6) geeignet sind.

2. Raucherzeuger zur Applikation von phytosanitären Produkten und/oder Lebensmittelzusätzen auf Obst und Gemüse nach Anspruch 1, **dadurch gekennzeichnet, dass** das Produkt die folgenden Komponenten umfasst:
- einen Wirkstoff mit einem Gewichtsanteil von 25 %,
- eine Phyllosilikatmatrix mit einem Gewichtsanteil von 50 %,
- ein Polysaccharid mit einem Gewichtsanteil von 15 %, und
- Kaliumchlorat, mit einem Gewichtsanteil von 10 %.

3. Raucherzeuger zur Applikation von phytosanitären Produkten und/oder Lebensmittelzusätzen auf Obst und Gemüse nach einem der vorhergehenden Ansprüche, **dadurch gekennzeichnet, dass** der elektrische Widerstand (3) am unteren Teil des Rezipienten (2) angeordnet ist.

4. Raucherzeuger zur Applikation von phytosanitären Produkten und/oder Lebensmittelzusätzen auf Obst und Gemüse nach einem der vorhergehenden Ansprüche, **dadurch gekennzeichnet, dass** er zusätzlich eine 12-V-Batterie als Stromquelle (6) umfasst, die mit dem elektrischen Widerstand (3) verbunden ist.

5. Raucherzeuger zur Applikation von phytosanitären Produkten und/oder Lebensmittelzusätzen auf Obst und Gemüse nach Anspruch 4, **dadurch gekennzeichnet, dass** das Zündsystem des Behälters zusätzlich ein Steuersystem (7) zwischen der Energiequelle (6) und dem elektrischen Widerstand (3) umfasst.

6. Raucherzeuger zur Applikation von phytosanitären Produkten und/oder Lebensmittelzusätzen auf Obst und Gemüse nach Anspruch 5, **dadurch gekennzeichnet, dass** die Energiequelle (6) und das Steuersystem (7) in einem integrierten Modul (11) untergebracht sind.

7. Installation (8) von Raucherzeugern zur Applikation von phytosanitären Produkten und/oder Lebensmittelzusätzen auf Obst und Gemüse, die mehrere Raucherzeuger zur Applikation von phytosanitären Produkten und/oder Lebensmittelzusätzen auf Obst und Gemüse nach einem der Ansprüche 1 bis 4 umfasst, **dadurch gekennzeichnet, dass** das Zündsystem der Behälter eine zentrale Steuerung (9) mit verschiedenen Anschlüssen (10) umfasst, die einer Stromquelle (6) nachgeschaltet sind, so dass von jedem Anschluss (10) ein feuerfestes Kabel (4) zu jedem Raucherzeugungsbehälter (1) austritt.

8. Herstellungsverfahren eines Raucherzeugers zur Applikation von phytosanitären Produkten und/oder Lebensmittelzusätzen auf Obst und Gemüse nach einem der Ansprüche 1 bis 4, **dadurch gekennzeichnet, dass** es die folgenden Schritte umfasst:
- Platzieren eines elektrischen Widerstands (3) im Inneren des Rezipienten (2);
- Anschließen des Widerstands (3) an die feuerfesten Kabel (4), die sich, ausgehend vom elektrischen Widerstand (3), zur Außenseite des Rezipienten (2) erstrecken;
- Herstellen des zu applizierenden Produkts, was folgende Schritte umfasst:
- Hinzufügen der Komponenten in der folgenden Reihenfolge: die Phyllosilikatmatrix, das Polysaccharid und den Wirkstoff,
- Vermischen, Homogenisieren und Mahlen dieser Mischung,
- Hinzufügen des Kaliumchlorats, und
- Vermischen und Homogenisieren; und
- Verstauen des Produkts im Inneren des Rezipienten (2).

## Revendications

1. Générateur de fumée pour appliquer des produits phytosanitaires et/ou des additifs alimentaires sur des fruits et des légumes, comprenant un contenant générateur de fumée (1) et un produit à appliquer, le générateur de fumée (1) comprenant un récipient (2), à l'intérieur duquel se trouve le produit à appliquer et un système d'allumage du contenant (1), **caractérisé en ce que** le produit à appliquer comprend les composants suivants:
- un principe actif, d'une proportion pondérale comprise entre 5% et 30%, qui comprend un ou plusieurs de ces produits: Imazalil, o-phénylphénol, thiophanate-méthyl, thiabendazole, prochloraz, fosétyl-Al, chlorprophame, pyréthrines, pyriméthanil, fenhexamide , ammonium quaternaire, biguanidine, acide sorbique, sorbate de potassium, huiles essentielles, acide ascorbique, acide citrique et citrates;
- une matrice de phyllosilicate ayant une proportion pondérale comprise entre 25% et 80%, qui comprend un ou plusieurs de ces produits: antigorite, chrysotile, kaolinite, vermiculite, talc, pyrophyllite, biotite, muscovite, lépidolite, marguerite, glauconite et chlorite;
- un polysaccharide, ayant une proportion en poids comprise entre 5% et 25%; et
- le chlorate de potassium, ayant une proportion en poids comprise entre 5% et 20%;
et **en ce que** le système d'allumage du contenant (1) comprend une résistance électrique (3) d'où sortent des câbles ignifuges (4), susceptibles de se connecter à une source d'énergie (6).

2. Générateur de fumée pour de produits phytosanitaires et / ou d'additifs alimentaires sur les fruits et légumes, selon la revendication 1, **caractérisé en ce que** le produit comprend les composants suivants:
- un ingrédient actif, ayant une proportion en poids de 25%.
- une matrice de phyllosilicate ayant une proportion en poids de 50%
- un polysaccharide, ayant une proportion en poids de 15%, et
- chlorate de potassium, ayant une proportion en poids de 10%.

3. Générateur de fumée pour appliquer de produits phytosanitaires et / ou d'additifs alimentaires sur des fruits et légumes, selon l'une quelconque des revendications précédentes, **caractérisé en ce que** la résistance électrique (3) est située dans la partie inférieure du récipient (2).

4. Générateur de fumée pour appliquer de produits phytosanitaires et / ou d'additifs alimentaires sur des fruits et légumes, selon l'une quelconque des revendications précédentes, **caractérisé en ce qu'**il comprend en outre une batterie 12 V comme source d'alimentation (6) connectée à la résistance électrique (3).

5. Générateur de fumée pour l'application de produits phytosanitaires et / ou d'additifs alimentaires sur les fruits et légumes, selon la revendication 4, **caractérisé en ce que** le système d'allumage du récipient comprend en outre un système de commande (7) entre la source d'énergie (6) et la résistance électrique (3).

6. Générateur de fumée pour l'application de produits phytosanitaires et / ou d'additifs alimentaires sur des fruits et légumes, selon la revendication 5, **caractérisé en ce que** la source d'énergie (6) et le système de commande (7) sont situés dans un module intégré (11).

7. Installation (8) de générateur de fumée pour appliquer des produits phytosanitaires et / ou d'additifs alimentaires sur des fruits et des légumes, qui comprend plusieurs générateurs de fumée pour appliquer des produits phytosanitaires et / ou d'additifs alimentaires sur les fruits et légumes selon les revendications 1 à 4, **caractérisée en ce que** le le système d'allumage des contenants comprend un système de commande centralisé (9) ayant différentes connexions (10) situées à la suite d'une source d'alimentation (6), de sorte qu'un câble ignifuge (4) sort de chaque connexion (10) vers chaque contenant de générateur de fumée (1).

8. Procédé de fabrication d'un générateur de fumée pour appliquer des produits phytosanitaires et/ou d'additifs alimentaires dans des fruits et légumes, selon l'une quelconque des revendications 1 à 4, **caractérisé en ce qu'**il comprend les étapes suivantes:
- placer une résistance électrique (3) à l'intérieur du récipient (2);
- connecter la résistance (3) aux câbles ignifuges (4) qui, à partir de la résistance électrique (3), s'étendent vers l'extérieur du récepteur (2);
- fabriquer le produit pour appliquer, qui comprend les étapes suivantes:
- ajouter les composants dans l'ordre suivant : la matrice de phyllosilicate, le polysaccharide et la substance active,
- mélanger, homogénéiser et broyer ledit mélange,
- ajouter le chlorate de potassium, et
- mélanger et homogénéiser; et
- emballez le produit dans le récipient (2).
